(19) Europäisches Patentamt
European Patent Office
Office européen des brevets

(11) Veröffentlichungsnummer: **0 076 011**
**B1**

(12) # EUROPÄISCHE PATENTSCHRIFT

(45) Veröffentlichungstag der Patentschrift: **13.05.87**

(21) Anmeldenummer: **82201198.7**

(22) Anmeldetag: **24.09.82**

(51) Int. Cl.[4]: **C 04 B 35/64,** H 01 G 4/12, H 01 B 3/12, C 04 B 35/46, C 04 B 35/49

(54) **Verfahren zur Herstellung eines Dielektrikums.**

(30) Priorität: **25.09.81 DE 3138177**

(43) Veröffentlichungstag der Anmeldung:
**06.04.83 Patentblatt 83/14**

(45) Bekanntmachung des Hinweises auf die Patenterteilung:
**13.05.87 Patentblatt 87/20**

(84) Benannte Vertragsstaaten:
**DE FR GB NL**

(56) Entgegenhaltungen:
**FR - A - 1 076 602**
**GB - A - 936 024**
**GB - A - 1 186 116**
**US - A - 3 920 781**
**US - A - 3 987 347**

**PROCEEDINGS OF THE 3RD MEETING ON FERROELECTRIC MATERIALS AND THEIR APPLICATIONS (FMA-3), Kyoto, 20.-22. Mai 1981, Japanese Journal of Applied Physics, Band 20, Supplement 20-4, 1981, Seiten 147-150, Tokyo, JP; Y. SAKABE et al.: "High-dielectric constant ceramics for base metal monolithic capacitors"**
**Idem.**
**PHYSICAL REVIEW B, vol. 20, no. 9, 1. November 1979, Seiten 3871-3878, New York, USA; H.-J. HAGEMANN et al.: "Valence change and phase stability of 3d-doped BaTiO3 annealed in oxygen and hydrogen"**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **FR GB NL**

(72) Erfinder: **Hagemann, Hans-Jürgen, Dr., Arndtstrasse 23, D-5100 Aachen (DE)**
Erfinder: **Wernicke, Rolf, Dr., Yorckstrasse 19, D-5100 Aachen (DE)**
Erfinder: **Hünten, Siegfried, Haarbachtalstrasse 1, D-5100 Aachen (DE)**
Erfinder: **Klomp, Cornelius Johannes, den Haas 21, NL-5555 AD Valkenswaard (NL)**
Erfinder: **Noorlander, Willem, Constantijnstraat 8, Nuenen (NL)**

(74) Vertreter: **Nehmzow-David, Fritzi-Maria et al, Philips Patentverwaltung GmbH Billstrasse 80 Postfach 10 51 49, D-2000 Hamburg 28 (DE)**

EP 0 076 011 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines Dielektrikums aus ferroelektrischer Keramik mit Perowskitstruktur der Grundformel $ABO_3$, bei dem das Dielektrikum in einer reduzierenden Atmosphäre bei einer Temperatur im Bereich von 1320 bis 1450 °C dichtgesintert wird.

Es können mit dem Dielektrikum z.B. Vielschichtkondensatoren hergestellt werden, derart, dass die Keramik gemeinsam mit Metallelektroden dichtgesintert wird. Es können aus der Keramik aber ebensogut monolithische Substrate gefertigt werden, z.B. Scheibchen oder Röhrchen, die an ihren Hauptflächen vor oder nach dem Sintern mit Metallschichten, z.B. Elektrodenschichten, versehen werden können.

Aus Kostengründen ist es zweckmässig, für die Elektroden Nichtedelmetalle oder Legierungen aus Nichtedelmetallen zu verwenden, z.B. Nickel oder Chrom und deren Legierungen.

Um besonders hohe Kapazitäten zu erzielen, werden als Dielektrika ferroelektrische Keramiken mit Perowskitstruktur verwendet, die der Grundformel $ABO_3$ entsprechen. In der Praxis wird das A/B-Verhältnis häufig geringfügig von 1 abweichend gewählt, und sowohl für die A- als auch für die B-Platz-Ionen werden mehrere unterschiedliche Ionen verwendet. Um preiswerte Kondensatoren ohne Edelmetallelektroden herstellen zu können, wird die Keramik gemeinsam mit den Elektrodenbelägen in reduzierender Atmosphäre dichtgesintert. Dies betrifft insbesondere Vielschichtkondensatoren.

Aus der US-PS 3 920 781 (= DE-AS 2 215 642) z.B. sind solche Dielektrika und daraus hergestellte Vielschichtkondensatoren mit Nichtedelmetallelektroden bekannt, bei denen das A/B-Verhältnis in den Grenzen von 0,95 bis 1,00 liegt, bei denen geringe Mengen der zweiwertigen A- oder der vierwertigen B-Ionen durch Ionen niedrigerer Wertigkeit («Akzeptordotierungen») ersetzt sind und die im Temperaturbereich von 1000 °C bis 1400 °C in einer reduzierenden Atmosphäre mit einem Sauerstoffpartialdruck $p_{O_2} < 10^{-7}$ bar dichtgesintert werden.

Es hat sich gezeigt, dass die Herstellung dieser Kondensatoren einen besonders hohen technischen Aufwand in bezug auf die Einhaltung des A/B-Verhältnisses und die Vermeidung von Verunreinigungen erfordert und dass diese Kondensatoren keine optimalen elektrischen Eigenschaften zeigen insofern als ihre elektrischen Kennwerte bei Dauerstandsprüfungen nicht stabil bleiben.

Der Vollständigkeit halber wird darauf hingewiesen, dass aus GB-PS 1 186 116 ein Verfahren zur Herstellung eines keramischen Materials mit hoher Dielektrizitätskonstante auf Basis von halbleitendem $BaTiO_3$ bekannt war, wobei dem Ausgangsmaterial für die halbleitende Keramik metallische Zusätze als Isolierschichten bildendes Material gegeben werden. Die bekannte Keramik wird zunächst reduzierend gesintert und in einem nachfolgenden Oxidationsschritt wird aus den metallischen Zusätzen eine elektrisch isolierende Oxidschicht an den Korngrenzen der halbleitenden Keramik aufgebaut.

Der Erfindung liegt die Aufgabe zugrunde, das Verfahren zur Herstellung des im Oberbegriff des Anspruches angegebenen Dielektrikums derart auszugestalten, dass die elektrischen Eigenschaften von mit diesem Dielektrikum hergestellten Kondensatoren verbessert werden und insbesondere bei Dauerstandsprüfungen stabil bleiben.

Diese Aufgabe wird erfindungsgemäss dadurch gelöst, dass der Sinterkörper bei einer Temperatur im Bereich von 500 bis 900 °C über eine Zeitdauer von 0,5 bis 8 h in einer $N_2$–$O_2$-Atmosphäre, die einen $O_2$-Anteil entsprechend einem $O_2$-Partialdruck $p_{O_2}$ zwischen 1 und $2 \cdot 10^4$ Pa ($10^{-5}$ bar und 0,2 bar) enthält, nachbehandelt wird, um durch die reduzierende Sinterung erzeugte Sauerstoffleerstellen wieder aufzufüllen.

Nach einer weiteren vorteilhaften Ausgestaltung der Erfindung wird der Sinterkörper bei einer Temperatur von 700 bis 800 °C während 1 bis 4 h in einer $N_2$–$O_2$-Atmosphäre, die einen $O_2$-Anteil entsprechend einem Partialdruck von 20 Pa ($2 \times 10^{-4}$ bar) enthält, nachbehandelt.

Mit diesem getrennten Nachbehandlungsschritt unter Sauerstoffeinfluss ist der Vorteil verbunden, dass einerseits die in der Keramik durch die reduzierende Sinterung erzeugten Sauerstoffleerstellen wieder aufgefüllt werden, und andererseits noch keine schädliche Oxidation von Elektrodenmetall eintritt. Wird Chrom$^{3+}$ als Akzeptordotierung eingesetzt, erhöht sich durch diese Nachbehandlung gleichzeitig die Valenz der Cr-Dotierung von $3^+$ auf $4^+$.

Ein weiterer, nicht unbeachtlicher Vorteil ist, dass eine Nachbehandlung von mit Nichtedelmetallelektroden versehener Keramik sogar an Luft möglich ist, wenn im Temperaturbereich von 500 bis 600 °C gearbeitet wird. Hierbei entfällt dann z.B. die Notwendigkeit, gasdichte Öfen einzusetzen.

Nach vorteilhaften Weiterbildungen der Erfindung werden für die Herstellung des Dielektrikums Karbonate und/oder Oxide gemäss folgender Grundformel eingesetzt:

$$(Ba_xCa_{1-x})\,(Ti_{y-z-a}Zr_{1-y}Cr_z)O_{3-b}$$

mit

$0{,}80 \leqq x \leqq 0{,}92$
$0{,}80 \leqq y \leqq 0{,}88$
$0{,}003 \leqq z \leqq 0{,}010$
$0{,}00 \leqq a \leqq 0{,}04$
$0{,}00 \leqq b \leqq z/2$

Der Wert für b stellt sich abhängig von den Werten für x, y, z und a während der Sinterung ein.

Insbesondere werden Karbonate und/oder Oxide gemäss folgender Grundformel eingesetzt:

$$(Ba_xCa_{1-x})\,(Ti_{y-z-a}Zr_{1-y}Cr_z)O_{3-b}$$

mit

$x \approx 0{,}86$
$0{,}82 \leqq y \leqq 0{,}84$
$0{,}003 \leqq z \leqq 0{,}010$
$a \approx 0{,}025$
$0{,}00 \leqq b \leqq z/2$

Nach einer weiteren vorteilhaften Ausgestaltung der Erfindung werden die Ausgangsmaterialien für das Dielektrikum etwa 15 h bei einer Temperatur im Bereich von 1150 bis 1250 °C, vorzugsweise bei 1200 °C, in Luft calciniert.

Wenn so verfahren wird, dass nach dem Mischen der die Perowskitphase bildenden Verbindungen mit der Verbindung des Dotierstoffes (Cr) ein Calcinierungsprozess im Temperaturbereich von 1150 °C bis 1250 °C durchgeführt wird, ergibt sich der Vorteil, dass bereits $CO_2$ aus verwendeten Karbonaten abgespalten wird; bei dem nachfolgenden Dichtsinterungsprozess findet also keine Gasbildung mehr statt, und das Endprodukt wird eine dichtere Struktur haben.

Ein weiterer Vorteil dieses Verfahrensschrittes ist, dass eine Perowskitbildung bereits abgeschlossen und eine weitgehende Mischkristallbildung erfolgt ist.

Nach einer weiteren Ausgestaltung der Erfindung werden den Ausgangsmaterialien für das Dielektrikum 0,2 bis 2,0 Mol% einer im Temperaturbereich von 1100 bis 1150 °C calcinierten Sinterhilfsphase aus $Ba_2TiSi_2O_8$ (weiter als BTS bezeichnet) zugesetzt.

Diese Sinterhilfsphase baut sich nicht in das Perowskitgitter ein und hat den Vorteil, dass sie die Dichtsinterung des Dielektrikums aufgrund von Flüssigphasenbildung bei geringerer Temperatur ermöglicht, die elektrischen Eigenschaften des Dielektrikums jedoch nicht wesentlich beeinflusst.

Mit dem Verfahren nach der Erfindung ergeben sich ausser den genannten noch folgende weitere Vorteile:

Durch die Wahl $a > O$ und die Zugabe der Sinterhilfsphase ist es möglich, das keramische Dielektrikum unterhalb von 1400 °C dichtzusintern – es werden mindestens 98% der theoretischen Dichte erreicht – und dabei gleichzeitig eine sehr gleichmässige Mikrostruktur mit einem Korngefüge einer Korngrösse im Bereich von 5 bis 10 µm zu erreichen. Beide Parameter sind z. B. wichtig, um hochwertige Kondensatoren herstellen zu können.

Es ist ausserdem wichtig, wenn Vielschichtkondensatoren hergestellt werden sollen, Sintertemperaturen < 1400 °C anzuwenden, wenn Elektroden aus Nickel eingesetzt werden sollen; Temperaturen > 1400 °C liegen zu dicht am Schmelzpunkt des Nickels und es bilden sich zum Teil unzusammenhängende Elektrodenschichten aus.

Durch die Verwendung von Chrom als Akzeptordotierung wird gegenüber entsprechenden, jedoch undotierten dielektrischen Materialien eine Verbreiterung der Temperatur-Charakteristik für die Dielektrizitätskonstante $\varepsilon$ (T), eine Verminderung des Verlustfaktors $\tan\delta$ und eine Erhöhung des Isolationswiderstandes $R_i$ erreicht.

Bei einem Wert für $a > O$ und mit einer Cr-Dotierung wird die vollständige Reoxidation der Keramiken durch die Nachbehandlung in einer $N_2$–$O_2$-Atmosphäre möglich. Dadurch wird der Nachteil vermieden, den bisher alle bekannten Vielschichtkondensatoren mit Ni- oder anderen Nichtedelmetallelektroden haben: nämlich die gegenüber in Luft gesinterten Kondensatoren erhöhte Neigung zur Verschlechterung der elektrischen Eigenschaften bei oder nach einer Dauerstandsprüfung. Derartige Dauerstandsprüfungen werden z. B. durchgeführt bei einer Temperaturbelastung von 85 °C unter einer Spannung, die dem 2-fachen bzw. 1½-fachen Wert der spezifizierten Betriebsgleichspannung entspricht über eine Dauer von 200 h bzw. 1000 h.

Wenn als Ausgangsmaterial für Elektroden NiO- oder CoO-Pulver eingesetzt wird, ergibt sich der folgende Vorteil:

Vielschichtkondensatoren z. B. werden aus keramischen Folien als Dielektrikum und aufgedruckten Metallpasten als Elektroden hergestellt. Beide Komponenten enthalten organische Bindemittel, die vorsichtig in einer oxidierenden Atmosphäre ausgebrannt werden müssen, da sonst Kohlenstoffreste übrigbleiben, die leicht zu Rissen in den Kondensatoren (senkrecht zu den Elektroden) führen können. Werden nun z. B. Ni-Pasten genügend gut ausgebrannt, so beginnt das feinteilige Ni-Pulver bereits zu oxidieren, was die Tendenz zur Bildung von Rissen oder zur Delamination (Spalten zwischen den Schichten im gesinterten Kondensator) erhöht. Diese Probleme werden dadurch gelöst, dass Schichten auf Basis von NiO-Pasten verwendet werden, die sich in Ni-Schichten umwandeln, wenn die Kondensatoren nach dem vollständigen Ausbrennen des Bindemittels in einer reduzierenden Atmosphäre gesintert werden.

Im folgenden werden Ausführungsbeispiele der Erfindung beschrieben und in ihrer Wirkungsweise erläutert.

I. Mit dem Dielektrikum gemäss der Erfindung hergestellte Scheibenkondensatoren

Als Ausgangsmaterialien für die perowskitische Grundverbindung dienten $BaCO_3$, $CaCO_3$, $TiO_2$ in Form von Rutil, $ZrO_2$ und für die Akzeptordotierung $Cr_2O_3$.

Zur Herstellung von keramischen Probekörpern zu Messzwecken wurden alle Ausgangsmaterialien, also die Ausgangsmaterialien für die perowskitische Grundverbindung sowie das Ausgangsmaterial für die Dotierung der gewünschten Zusammensetzung entsprechend eingewogen und für 2 h aufgeschlämmt in Alkohol in einer Planetenkugelmühle gemischt. Nach dem Trocknen wurde das Pulver für 15 h an Luft bei 1200 °C calciniert. Die auf diese Weise erhaltenen Pulver wurden gemeinsam mit einer gewünschten Menge, z. B. 0,5 Mol%, der Sinterhilfsphase BTS 1 h trokken in einer Planetenkugelmühle gemahlen und mechanisch und hydrostatisch zu Scheibchen eines Durchmessers von 5 mm, einer Dicke von 0,5 mm und einer Dichte von 60 bis 65% verpresst. Anschliessend wurden auf den Hauptflächen der keramischen Scheiben Elektroden aus einer Paste, hergestellt aus NiO-Pulver und einem geeigneten organischen Bindemittel, angebracht. Als Bindemittel wurde Zelluloseacetat eingesetzt. Nach Ausbrennen des Bindemittels wurden die Formkörper in einem strömenden Gemisch von

befeuchtetem $N_2$ (95 Vol.%) mit 5 Vol.% $H_2$ bei unterschiedlichen Sintertemperaturen gesintert. Die besten Ergebnisse wurden erhalten bei Sintertemperaturen im Bereich von 1340 °C bis 1400 °C. Die Formkörper wurden mit ca. 3 °C/min aufgeheizt und abgekühlt, wobei sie über eine Dauer von 14 h auf Maximaltemperatur gehalten wurden.

Nach dem Abkühlen wurden die Formkörper bei 800 °C in einer $N_2$–$O_2$-Atmosphäre, die einen $O_2$-Anteil entsprechend einem $O_2$-Partialdruck $p_{O_2} = 2 \times 10^{-4}$ bar enthielt, nachbehandelt.

Aus den nachfolgenden Tabellen ist ersichtlich, in welcher Weise die Änderung einzelner Parameter auf die elektrischen Eigenschaften der Kondensatoren einwirkt.

1. Förderung der Verdichtung des Sinterkörpers durch Zugabe von Sinterhilfsphasen in Form von $Ba_2TiSi_2O_8$ (BTS) oder $SiO_2$

TABELLE 1

| S.H. | $T_s^{min}$ [°C] | ε | tanδ | RC [s] |
|---|---|---|---|---|
| ohne | > 1470 | 7000 | 0,02 | 300 |
| 0,5 Mol% BTS | 1430 | 6800 | 0,012 | 400 |
| 1,0 Mol% BTS | 1430 | 7200 | 0,015 | 250 |
| 1,0 Mol% $SiO_2$ | 1400 | 9500 | 0,170 | < 10 |

In Tabelle 1 bedeuten:

S.H. = Sinterhilfsphase
$T_s^{min}$ = minimale, zur Verdichtung notwendige Sintertemperatur
ε = Dielektrizitätskonstante } bei 25 °C
tanδ = Verlustfaktor } bei 25 °C
RC = Zeitkonstante

Material:

$(Ba_{0,86}Ca_{0,14})\ (Ti_{0,81}Zr_{0,18}Cr_{0,005})O_{3-b}$.

Das keramische Material für das Dielektrikum hat einen Zusatz von 0,5 bis 1,0 Mol% BTS.

Das BTS wurde zunächst im Temperaturbereich von 1100 bis 1150 °C calciniert. Aus den Werten der Tabelle 1 zeigt sich, dass der Zusatz der Sinterhilfsphase BTS die elektrischen Werte unbeachtlich beeinflusst. Der Zusatz von $SiO_2$ als Sinterhilfsphase empfiehlt sich nicht; zwar wird die Dielektrizitätskonstante beträchtlich grösser, die Werte für den Verlustfaktor und die Zeitkonstante werden jedoch untragbar.

2. Förderung der Sinterung und der elektrischen Eigenschaften durch die Wahl a > O.

TABELLE 2

| a | $T_s^{min}$ [°C] | d [$gcm^{-3}$] | ε | tanδ | RC [s] |
|---|---|---|---|---|---|
| −0,01 | > 1450 | – | – | – | – |
| 0 | 1400 | 5,54 | 9200 | 0,010 | 500 |
| 0,01 | 1370 | 5,68 | 10300 | 0,010 | 1000 |
| 0,015 | 1350 | 5,70 | 8700 | 0,010 | 900 |
| 0,025 | 1340 | 5,69 | 8700 | 0,017 | 800 |
| 0,030 | 1380–1400 | 5,66 | 7800 | 0,010 | 1000 |
| 0,040 | > 1450 | – | – | – | – |

In Tabelle 2 bedeutet:
d[$gcm^{-3}$] = Dichte

Material:
$Ba_{0,86}Ca_{0,14})\ (Ti_{0,815-a}Zr_{0,18}Cr_{0,005})O_{3-b}$ + 0,5 Mol% BTS.
Der Wert für a gibt die Abweichung von der Stöchiometrie A/B = 1 an.

3. Verbreiterung der Temperatur-Charakteristik der Dielektrizitätskonstanten ε und Verminderung des Verlustfaktors tanδ durch die Cr-Dotierung

TABELLE 3

| z | ε | Δε | tanδ | RC [s] |
|---|---|---|---|---|
| 0 | 12500 | + 30%/–60% | 0,030 | 1200 |
| 0,001 | 12000 | + 25%/–55% | 0,025 | 1300 |
| 0,002 | 11000 | + 17%/–40% | 0,016 | 2200 |
| 0,005 | 7600 | + 10%/–20% | 0,014 | 1000 |

Δε bedeutet die maximale Abweichung nach oben und unten vom ε-Wert bei 25 °C im Temperaturintervall von + 10 °C bis − 85 °C

Material:
$(Ba_{0,86}Ca_{0,14})\ (Ti_{0,81-z}Zr_{0,18}Cr_z)O_{3-b}$ + 0,5 Mol% BTS.

4. Verbesserung der Stabilität der elektrischen Kenndaten bei Dauerstandsprüfungen bei einer Temperatur von 85 °C und einer Gleichspannung von 2 kV/mm durch Nachbehandlung in einer $N_2$–$O_2$-Atmosphäre mit einem $O_2$-Partialdruck von $2 \times 10^{-4}$ bar bei einer Temperatur von 800 °C.

TABELLE 4

| ρ | (Sinterkörper nachbehandelt) | ρ | (Sinterkörper unbehandelt) |
|---|---|---|---|
| 0,1 h | $1,3 \times 10^{12}$ | | $1,5 \times 10^{11}$ |
| 1 h | $1,5 \times 10^{12}$ | | $4 \times 10^{11}$ |
| 10 h | $1,8 \times 10^{12}$ | | $5 \times 10^{11}$ |
| 100 h | $2,1 \times 10^{12}$ | | $5 \times 10^{10}$ |
| 500 h | $2,2 \times 10^{12}$ | | $10^7$ |
| 1000 h | $2,2 \times 10^{12}$ | | $10^4$ |

In Tabelle 4 sind die spezifischen Isolationswiderstände ρ bei 85°C in Ωcm angegeben.

Material:
$(Ba_{0,86}Ca_{0,14})$ $(Ti_{0,80}Zr_{0,18}Cr_{0,005})O_{3-b}+0,5$ Mol% BTS.

II. Mit dem Dielektrikum gemäss der Erfindung hergestellte Vielschichtkondensatoren.

Als Ausgangsmaterialien für die perowskitische Grundverbindung dienten $BaCO_3$, $CaCO_3$, $TiO_2$ in Form von Rutil, $ZrO_2$ und für die Akzeptordotierung $Cr_2O_3$.

Zur Herstellung von keramischen Probekörpern zu Messzwecken wurden alle Ausgangsmaterialien, also die Ausgangsmaterialien für die perowskitische Grundverbindung sowie das Ausgangsmaterial für die Dotierung der gewünschten Zusammensetzung entsprechend eingewogen und für 15 h aufgeschlämmt in Wasser in einer Kugelmühle gemischt. Nach dem Trocknen wurde das Pulver für 15 h an Luft bei 1200 °C calciniert. Die auf diese Weise erhaltenen Pulver wurden aufgeschlämmt in Wasser und unter Zusatz eines geeigneten Bindemittels, z.B. Polyvinylalkohol, gemischt, aus diesem Schlicker wurden anschliessend 50 µm dicke Folien gegossen, die nach dem Trocknen mit einer NiO-Paste zur Ausbildung von Elektrodenbelägen bedruckt wurden.

Zur Ausbildung einer Sandwich-Struktur wurden jeweils 5 mit Elektrodenpaste versehene Folien aufeinander gestapelt und gepresst. Die Bindemittel der Elektrodenpaste und der grünen keramischen Folien wurden anschliessend innerhalb von 16 h durch langsames Aufheizen auf eine Temperatur von 640 °C in Luft ausgebrannt.

Diese Sandwich-Struktur wurde 2 h bei einer Temperatur von 1340 °C in einem strömenden Gemisch von 94 Vol.% befeuchtetem $N_2$ mit 6 Vol.% $H_2$ gesintert. Der Aufheiz- und Abkühlzyklus entsprach dem vorstehend unter I. beschriebenen. Die Sinterkörper wurden nach dem Abkühlen 4 h bei 700 °C in einer $N_2$–$O_2$-Atmosphäre, die einen $O_2$-Anteil entsprechend einem $O_2$-Partialdruck $p_{O_2}$ = 2 × $10^{-4}$ bar enthielt, nachbehandelt. Anschliessend wurden auf den Sinterkörpern Kopfkontakte aus Cr/Cu durch Kathodenzerstäubung angebracht. Die Dicke der dielektrischen Schichten betrug 28 µm.

Für diese Vielschichtkondensatoren wurden folgende elektrische Kenndaten gemessen:
C = 60 bis 80 nF;
ε bei 25 °C = 4500;
tanδ bei 1 kHz, 1 $V_{eff}$ und 25 °C = 150 × $10^{-4}$;
Temperaturabhängigkeit der Kapazität: maximal +15% bis −52% im Temperaturbereich von +10 °C bis +85 °C;
Isolationswiderstand $R_i$ bei 25 °C, 50 V und 60 s nach Anlegen der Spannung = 50 bis 100 GΩ;
Zeitkonstante RC = 5000 bis 10 000 s;
Isolationswiderstand $R_i$ bei 85 °C, 50 V und 60 s nach Anlegen der Spannung = 10 bis 20 GΩ;
Zeitkonstante RC = 500 bis 1000 s.

Nach einer Dauerstandsprüfung bei 85 °C über 1000 h bei einer Spannung von 56 V ≙ 2 kV/mm wurden folgende elektrische Kenndaten gemessen:
ΔC bei 25 °C = −10% (ΔC bedeutet Änderung der Kapazität durch die Dauerstandsprüfung);
tanδ bei 25 °C, 1 kHz und 1 $V_{eff}$ = 200 bis 250 × $10^{-4}$;
Isolationswiderstand $R_i$ bei 25 °C, 50 V und 60 s nach Anlegen der Spannung = 20 bis 50 GΩ;
Zeitkonstante RC = 1000 bis 3000 s;
Isolationswiderstand $R_i$ bei 85 °C, 50 V und 60 s nach Anlegen der Spannung = 2 bis 5 GΩ;
Zeitkonstante RC = 50 bis 150 s.

**Patentansprüche**

1. Verfahren zur Herstellung eines Dielektrikums aus ferroelektrischer Keramik mit Perowskitstruktur der Grundformel $ABO_3$, bei dem das Dielektrikum in einer reduzierenden Atmosphäre bei einer Temperatur im Bereich von 1320 bis 1450 °C dichtgesintert wird, dadurch gekennzeichnet, dass der Sinterkörper bei einer Temperatur im Bereich von 500 bis 900 °C über eine Zeitdauer von 0,5 bis 8 h in einer $N_2$–$O_2$-Atmosphäre, die einen $O_2$-Anteil entsprechend einem $O_2$-Partialdruck $p_{O_2}$ zwischen 1 und 2 · $10^4$ Pa ($10^{-5}$ und 0,2 bar) enthält, nachbehandelt wird, um durch die reduzierende Sinterung erzeugte Sauerstoffleerstellen wieder aufzufüllen.

2. Verfahren nach Anspruch 1, dadurch gekennzeichnet, dass der Sinterkörper bei einer Temperatur von 700 bis 800 °C während 1 bis 4 h in einer $N_2$–$O_2$-Atmosphäre, die einen $O_2$-Anteil entsprechend einem $O_2$-Partialdruck $p_{O_2}$ von 20 Pa (2 × $10^{-4}$ bar) enthält, nachbehandelt wird.

3. Verfahren nach den Ansprüchen 1 und 2, dadurch gekennzeichnet, dass für die Herstellung des Dielektrikums Karbonate und/oder Oxide gemäss folgender Grundformel eingesetzt werden:

$$(Ba_xCa_{1-x})\ (Ti_{y-z-a}Zr_{1-y}Cr_z)O_{3-b} \text{ mit}$$

$$0,80 \leqq x \leqq 0,92$$
$$0,80 \leqq y \leqq 0,88$$
$$0,003 \leqq z \leqq 0,010$$
$$0,00 \leqq a \leqq 0,04$$
$$0,00 \leqq b \leqq z/2$$

4. Verfahren nach Anspruch 3, dadurch gekennzeichnet, dass Karbonate und/oder Oxide gemäss folgender Formel eingesetzt werden:

$$(Ba_xCa_{1-x})\ (Ti_{y-z-a}Zr_{1-y}Cr_z)O_{3-b}$$

mit

$x \approx 0{,}86$
$0{,}82 \leqq y \leqq 0{,}84$
$0{,}003 \leqq z \leqq 0{,}010$
$a \approx 0{,}025$
$0{,}00 \leqq b \leqq z/2.$

5. Verfahren nach den Ansprüchen 1 bis 4, dadurch gekennzeichnet, dass die Ausgangsmaterialien für das Dielektrikum 15 h bei einer Temperatur im Bereich von 1150 bis 1250 °C in Luft calciniert werden.

6. Verfahren nach Anspruch 5, dadurch gekennzeichnet, dass bei einer Temperatur von 1200 °C calciniert wird.

7. Verfahren nach einem der vorhergehenden Ansprüche, dadurch gekennzeichnet, dass den calcinierten Ausgangsmaterialien für das Dielektrikum 0,2 bis 2,0 Mol% einer im Temperaturbereich von 1100 bis 1150 °C calcinierten Sinterhilfsphase aus $Ba_2TiSi_2O_8$ zugesetzt werden.

8. Verfahren nach Anspruch 7, dadurch gekennzeichnet, dass 0,5 bis 1,0 Mol% der Sinterhilfsphase zugesetzt werden.

9. Verfahren nach einem der vorhergehenden Ansprüche, dadurch gekennzeichnet, dass die Ausgangsmaterialien für das Dielektrikum unter Zusatz eines geeigneten organischen Bindemittels zu grünen keramischen Formkörpern oder zu grünen, für die Herstellung von Vielschichtkondensatoren geeigneten Folien aufbereitet werden.

10. Verfahren nach einem der vorhergehenden Ansprüche, dadurch gekennzeichnet, dass für die Herstellung von Vielschichtkondensatoren eine Sandwich-Struktur aus keramischen Folien und Elektrodenpaste gebildet wird und dass diese Sandwich-Struktur oder aber Formkörper mit zwei Elektroden bei einer Temperatur im Bereich von 1340 bis 1420 °C, vorzugsweise im Bereich von 1340 bis 1370 °C, in reduzierender Atmosphäre dichtgesintert werden.

11. Verfahren nach Anspruch 10, dadurch gekennzeichnet, dass als Elektrodenpaste NiO oder CoO mit Zusatz eines geeigneten organischen Bindemittels verwendet wird.

12. Verfahren nach Anspruch 10, dadurch gekennzeichnet, dass als Sinteratmosphäre ein bei 25 °C mit $H_2O$ gesättigtes Gasgemisch aus (100-x) Vol.% $N_2$ und xVol.% $H_2$ mit $2 \leqq x \leqq 25$ eingesetzt wird.

**Claims**

1. A method of manufacturing a dielectric from ferroelectric ceramic material having a perowskite structure according to the basic formula $ABO_3$, in which the dielectric is densely sintered in a reducing atmosphere at a temperature in the range from 1320 to 1450 °C, characterized in that the sintered body is after-treated at a temperature in the range from 500 to 900 °C, for a period of time from 0.5 to 8 hours in an $N_2$–$O_2$-atmosphere containing a quantity of $O_2$ corresponding to a partial $O_2$ pressure $p_{O_2}$ between 1 and $2.10^4$ Pa ($10^{-5}$ and 0.2 bar) for replenishing the oxygen deficiency caused by the reducing sintering operation.

2. A method as claimed in Claim 1, characterized in that the sintered body is after-treated at a temperature from 700 to 800 °C for 1 to 4 hours in an $N_2$–$O_2$-atmosphere containing a quantity of $O_2$ corresponding to a partial $O_2$-pressure $p_{O_2}$ of 20 Pa ($2 \times 10^{-4}$ bar).

3. A method as claimed in Claims 1 and 2, characterized in that for the manufacture of the dielectric, carbonates and/or oxides according to the basic formula below are used:

$$(Ba_xCa_{1-x})\ (Ti_{y-z-a}Zr_{1-y}Cr_z)O_{3-b}$$

in which

$0.80 \leqq x \leqq 0.92$
$0.80 \leqq y \leqq 0.88$
$0.003 \leqq z \leqq 0.010$
$0.00 \leqq a \leqq 0.04$
$0.00 \leqq b \leqq z/2.$

4. A method as claimed in Claim 3, characterized in that carbonates and/or oxides according to the formula below are used:

$$(Ba_xCa_{1-x})\ (Ti_{y-z-a}Zr_{1-y}Cr_z)O_{3b}$$

in which

$x \approx 0.86$
$0.82 \leqq y \leqq 0.84$
$0.003 \leqq z \leqq 0.010$
$a \approx 0.025$
$0.00 \leqq b \leqq z/2.$

5. A method as claimed in Claims 1 to 4, characterized in that the starting materials for the dielectric are calcined in air for 15 hours at a temperature in the range from 1150 to 1250 °C.

6. A method as claimed in Claim 5, characterized in that calcination is carried out at a temperature of 1200 °C.

7. A method as claimed in any of the preceding Claims, characterized in that 0.2 to 2.0 mol.% of a $Ba_2TiSi_2O_8$ sintering aid which is calcined in the temperature range from 1100 to 1150 °C are added to the calcined starting materials for the dielectric.

8. A method as claimed in Claim 7, characterized in that 0.5 to 1.0 mol.% of the sintering aid is added.

9. A method as claimed in any of the preceding Claims, characterized in that the starting materials for the dielectric, to which a suitable organic binder is added, are worked into green ceramic bodies or green foils which are suitable for the manufacture of multilayer capacitors.

10. A method as claimed in any of the preceding Claims, characterized in that for the manufacture of multilayer capacitors a sandwich structure is formed of ceramic foils and electrode paste, which sandwich structure or dual-electrode capacitor body is densely sintered in a reducing atmosphere at a temperature in the range from 1340 to 1420 °C, preferably in the range from 1340 to 1370 °C.

11. A method as claimed in Claim 10, characterized in that NiO or CoO with the addition of a suitable organic binder is used as an electrode paste.

12. A method as claimed in Claim 10, characterized in that a gas mixture of (100-x) vol.% $N_2$ and x vol.% $H_2$ with $2 \leqq x \leqq 25$, saturated with $H_2O$ at 25 °C is used as a sintering atmosphere.

**Revendications**

1. Procédé pour la fabrication d'un diélectrique en une substance céramique ferro-électrique présentant une structure de Pérowskite et répondant à la formule de base $ABO_3$, selon lequel le diélectrique est fritté dense dans une atmosphère réductrice à une température située dans la gamme de 1320 à 1450 °C, caractérisé en ce que le corps fritté est post-traité à une température située dans la gamme de 500 à 900 °C pendant une durée de 0,5 à 8 h dans une atmosphère de $N_2$–$O_2$, qui contient une teneur en $O_2$ qui correspond à une pression partielle d'oxygène $P_{O_2}$ comprise entre 1 et $2.10^4$ Pa ($10^{-5}$ bar et 0,2 bar), afin de remplir les lacunes d'oxygène formées par le frittage réducteur.

2. Procédé selon la revendication 1, caractérisé en ce que le corps fritté est post-traité à une température de 700 à 800 °C pendant 1 à 4 h dans une atmosphère de $N_2$–$O_2$, contenant une teneur en $O_2$ qui correspond à une pression partielle d'oxygène $P_{O_2}$ de 20 Pa ($2 \times 10^{-4}$ bar).

3. Procédé selon la revendication 1 ou 2, caractérisé en ce que pour la réalisation du diélectrique sont utilisés des carbonates et/ou des oxydes répondant à la formule de base suivante:

$$(Ba_xCa_{1-x})\,(Ti_{y-z-a}Zr_{1-y}Cr_z)O_{3-b}$$

avec

$0{,}80 \leqq x \leqq 0{,}92$
$0{,}80 \leqq y \leqq 0{,}88$
$0{,}003 \leqq z \leqq 0{,}010$
$0{,}00 \leqq a \leqq 0{,}04$
$0{,}00 \leqq b \leqq z/2$

4. Procédé selon la revendication 3, caractérisé par l'utilisation de carbonate et/ou d'oxyde répondant à la formule suivante:

$$(Ba_xCa_{1-x})\,(Ti_{y-z-a}Zr_{1-y}Cr_z)O_{3-b}$$

avec

$x \approx 0{,}86$
$0{,}82 \leqq y \leqq 0{,}84$
$0{,}003 \leqq z \leqq 0{,}010$
$a \approx 0{,}025$
$0{,}00 \leqq b \leqq z/2$

5. Procédé selon les revendications 1 à 4, caractérisé en ce que les matériaux de départ pour le diélectrique sont calcinés pendant 15 h à une température située dans la gamme comprise entre 1150 à 1250 °C dans l'air.

6. Procédé selon la revendication 5, caractérisé en ce que la calcination s'effectue à une température de 1200 °C.

7. Procédé selon l'une des revendications précédentes, caractérisé en ce que les matériaux de départ calcinés pour le diélectrique sont additionnés de 0,2 à 2,0% en moles d'une phase auxiliaire de frittage en $Ba_2TiSi_2O_8$ calcinée dans la gamme de températures comprise entre 1100 et 1150 °C.

8. Procédé selon la revendication 7, caractérisé par l'addition de 0,5 à 1% en moles de la phase auxiliaire de frittage.

9. Procédé selon l'une des revendications précédentes, caractérisé en ce que les matériaux de départ pour le diélectrique sont traités avec addition d'un liant organique approprié de façon à obtenir des corps façonnés céramiques verts ou de feuilles appropriées pour la réalisation de condensateurs multicouches.

10. Procédé selon l'une des revendications précédentes, caractérisé en ce que pour la réalisation de condensateurs multicouches est formée une structure sandwich en feuilles céramiques et une pâte d'électrode et que cette structure sandwich ou des corps façonnés présentant deux électrodes sont frittés dense à une température située dans la gamme comprise entre 1340 et 1420 °C, de préférence dans la gamme comprise entre 1340 et 1370 °C dans une atmosphère réductrice.

11. Procédé selon la revendication 10, caractérisé en ce que comme pâte d'électrode est utilisé du NiO ou CoO avec addition d'un liant organique approprié.

12. Procédé selon la revendication 10, caractérisé en ce que comme atmosphère de frittage est utilisé un mélange gazeux saturé à 25 °C avec $H_2O$ en (100-x)% en volume de $N_2$ et x% en volume de $H_2$ avec $2 \leqq x \leqq 25$.